# FASCICULE DE BREVET EUROPEEN

(11) **EP 2 828 508 B1**
(45) Date de publication et mention de la délivrance du brevet: **25.08.2021**
(21) Numéro de dépôt: 13711682.8
(22) Date de dépôt: 22.03.2013
(51) Int. Cl.: F02C 7/266, F02P 15/00, F02P 15/02, F02C 9/26, F02K 3/08, F02P 3/08

(54) **APPAREIL D'ALLUMAGE POUR TURBORÉACTEUR**
ZÜNDSTEUERGERÄT FÜR TURBOLUFTSTRAHLTRIEBWERK
IGNITION CONTROL UNIT FOR TURBOJET ENGINE

(30) Priorité: 23.03.2012 FR 1252648
(43) Date de publication de la demande: 28.01.2015
(73) Titulaire: Safran Aircraft Engines, 75015 Paris (FR)
(72) Inventeur: SCHAEFFER, Christian, 77550 Moissy-Cramayel Cedex (FR); STIFANIC, David Gino, 77550 Moissy-Cramayel Cedex (FR); BOEDOT, Bertrand, 77550 Moissy-Cramayel Cedex (FR)
(74) Mandataire: Regimbeau
(86) Numéro de dépôt international: PCT/EP2013/056119
(87) Numéro de publication internationale: WO 2013/139974

(56) Documents cités:
- EP-A1- 2 290 223
- WO-A2-2008/127467
- DE-A1-102009 048 618
- FR-A1- 2 830 691
- FR-A1- 2 958 683
- GB-A- 1 537 278
- US-A- 5 263 318
- US-A- 5 510 952

## Description

### DOMAINE TECHNIQUE GENERAL

La présente invention concerne le domaine aéronautique, et porte plus précisément sur un boîtier d'allumage pour turboréacteur pour l'allumage d'une chambre de combustion principale et pour l'allumage de la postcombustion.

### CONTEXTE DE L'INVENTION

Les turboréacteurs pour avions sont couramment équipés d'un dispositif de postcombustion. Un dispositif de postcombustion comprend des moyens d'injection de carburant à proximité d'organes accroche-flamme et au moins une bougie d'allumage de postcombustion située dans une zone d'allumage de postcombustion. En régime de postcombustion, du carburant supplémentaire est injecté pour obtenir une augmentation de poussée.

Un tel turboréacteur comporte ainsi deux moyens d'allumage : des bougies principales pour l'allumage de la chambre de combustion principale, et des bougies de postcombustion pour l'allumage de la postcombustion.

Pour des raisons de simplicité, d'encombrement et de coût, un unique boîtier d'allumage commande simultanément l'allumage de la chambre de combustion principale ainsi que l'allumage de postcombustion. De la sorte, que l'on souhaite activer l'allumage de la chambre principale ou la postcombustion, les bougies principales et les bougies de postcombustion sont simultanément excitées. Les bougies principales claquent alors même lorsque seul le claquage des bougies de postcombustion est désiré.

Or, lors du fonctionnement du turboréacteur, une bougie principale est soumise à une très forte pression, de l'ordre de 30 bars en altitude. Dans ces conditions, le claquage d'une bougie principale implique une dégradation rapide de celle-ci. La durée de vie d'une bougie principale peut s'en trouver considérablement réduite, entraînant des coûts supplémentaires de maintenance et diminuant la disponibilité des appareils ainsi que la fiabilité de leurs performances.

Il est donc souhaitable de n'exciter une bougie principale que lorsque celle-ci doit être sollicitée, c'est-à-dire au démarrage ou redémarrage du turboréacteur.

Une ségrégation complète entre les voies d'allumage de bougie principale et les voies d'allumage de bougie de postcombustion, de sorte que l'excitation d'une bougie principale soit indépendante de l'excitation d'une bougie de postcombustion, est de nature à répondre à cette exigence.

Cependant, la mise en oeuvre de deux boîtiers d'allumage, dédié l'un aux bougies principales et l'autre aux bougies de postcombustion, représente un surcoût, un encombrement accru et une augmentation de masse qui peut ne pas être acceptable. En outre, la nécessité d'une sortie calculateur supplémentaire pour les commandes indépendantes peut être incompatible avec les systèmes existants.

De plus, le remplacement d'un boîtier d'allumage peut ne pas être concomitant avec une éventuelle adaptation d'autres éléments du système d'allumage, et notamment avec l'adaptation du signal de commande envoyés par le calculateur pour commander l'allumage. Ainsi, il est nécessaire que les modifications apportées au système d'allumage puissent être mises en oeuvre indépendamment les unes des autres.

Les documents US 5 510 952 A et GB 1 537 278 A divulguent des exemples de systèmes d'allumage.

### RESUME DE L'INVENTION

La présente invention a notamment pour but d'apporter une solution permettant de ségréguer l'excitation des bougies principale et des bougies de postcombustion, qui soit compatible avec les éléments d'un système d'allumage existants sans augmentation de la masse et de l'encombrement du système d'allumage.

A cet effet, on propose selon l'invention un boîtier d'allumage pour turboréacteur selon la revendication 1.

L'invention est avantageusement mais facultativement complétée par les caractéristiques suivantes, prises seules ou en une quelconque de leur combinaison techniquement possible:
- le boîtier comprend en outre un module de commande pour décoder le signal de commande afin de déterminer quelle voie d'allumage doit être activée;
- la durée d'une impulsion du signal de commande pour commander l'activation d'une voie d'allumage dépend de l'énergie requise pour l'excitation de la bougie correspondant à ladite voie d'allumage;
- le signal présente une temporisation après chaque impulsion du signal de commande, ladite temporisation correspondant à un niveau de signal différent du niveau de signal de l'impulsion et étant suivie par une commande continue à un niveau de signal correspondant au niveau de signal de l'impulsion;
- le boîtier comprend une voie d'alimentation électrique commune à la voie d'allumage de bougie principale et à la voie d'allumage de bougie postcombustion, ladite voie d'alimentation électrique commune comprenant un bloc capacitif unique destiné à être amené à une tension dépendant de la voie d'allumage à activer;
- chacune des voies d'allumage comporte un thyristor relié au bloc capacitif unique, ledit thyristor étant commandé en fonction de l'état de la voie d'alimentation électrique commune et de la commande impulsionnelle;
- le boîtier est adapté pour commencer la charge du bloc capacitif dès la détection d'une impulsion et avant la détermination de la voie d'allumage à activer;
- le boitier est apte, en réponse à un échelon de commande sur ladite unique voie de commande, à activer alternativement la voie d'allumage de bougie principale et la voie d'allumage de bougie de postcombustion.

L'invention porte également sur un système d'allumage pour turboréacteur selon la revendication 9.

### BREVE DESCRIPTION DES FIGURES

D'autres caractéristiques, buts et avantages de l'invention ressortiront de la description qui suit, qui est purement illustrative et non limitative, et qui doit être lue en regard des dessins annexés parmi lesquels:
- la figure 1 est un schéma illustrant un boîtier d'allumage de l'état de la technique;
- la figure 2 est un schéma illustrant un boîtier d'allumage selon un mode de réalisation possible de l'invention;
- la figure 3 est un chronogramme illustrant le comportement du boîtier d'allumage de l'état de la technique en réponse à un signal de commande de l'état de la technique;
- la figure 4 est un chronogramme illustrant le comportement du boîtier d'allumage selon un mode de réalisation possible de l'invention en réponse à un signal de commande de l'état de la technique;
- la figure 5 est un chronogramme illustrant le comportement du boîtier d'allumage selon un mode de réalisation possible de l'invention et du boîtier d'allumage de l'état de la technique en réponse à un signal de commande selon un mode de réalisation possible de l'invention dans le cadre de l'excitation d'une bougie principale ; et
- la figure 6 est un chronogramme illustrant le comportement du boîtier d'allumage selon un mode de réalisation possible de l'invention et du boîtier d'allumage de l'état de la technique en réponse à un signal de commande selon un mode de réalisation possible de l'invention dans le cadre de l'excitation d'une bougie de postcombustion.

### DESCRIPTION DETAILLEE

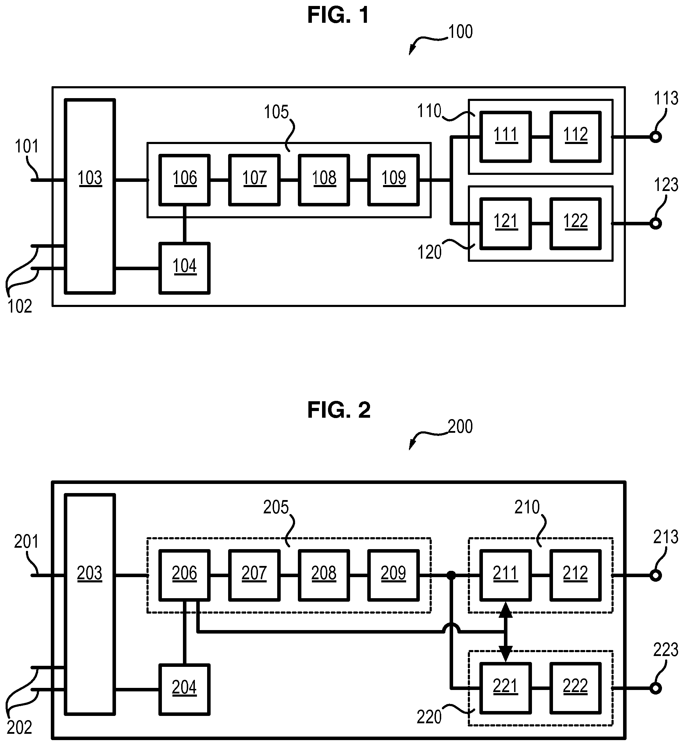

La figure 1 est un schéma illustrant un boîtier d'allumage 100 de l'état de la technique et mettant en évidence ses composants les plus importants. Un tel boîtier d'allumage 100 présente une alimentation électrique 101 et une unique voie de commande 102 pour recevoir un signal de commande en provenance d'un calculateur. La voie de commande 102 est ici matérialisée par deux lignes physiques pour réaliser une redondance améliorant la fiabilité de la commande du boîtier d'allumage 100.

Un étage de traitement électrique 103 met en oeuvre un filtrage électrique de l'alimentation et du signal de commande, et comporte un dispositif de protection contre les surtensions, afin de protéger le boîtier contre d'éventuelles altérations de ces entrées susceptibles d'endommager le boîtier d'allumage 100 ou d'en altérer le fonctionnement.

Le boîtier d'allumage 100 comporte également un module de commande 104 qui reçoit le signal de commande après qu'il ait transité par la voie de commande 102 et été traité par l'étage de traitement électrique 103. Ce module de commande 104 détermine l'activation des voies d'allumage de bougies à partir du signal de commande, et commande l'étage de conversion électrique 105 pour que celui-ci convertisse l'alimentation reçue à 28 volts en 2800 volts.

L'étage de conversion électrique 105 comporte à cet effet un module d'alimentation à découpage 106 de type convertisseur Flyback et un transformateur 107 pour élever la tension au niveau voulu. Un redresseur 108 redresse ensuite le courant pour charger les condensateurs 111, 121 de chacune des voies d'allumage 110, 120 de bougies.

Un éclateur 109 permet la décharge des condensateurs 111, 121 lorsque le seuil de tension désiré est atteint, à la fois au niveau d'une voie d'allumage des bougies principales 110 et d'une voie d'allumage des bougies de postcombustion 120. Le courant de décharge des condensateurs 111, 121 est alors transmis aux bobines d'induction des étages de sortie 112, 122 et entraîne le claquage des bougies d'allumage auxquelles l'énergie est transmise par les moyens de connexions 113, 123 avec celles-ci. L'étage de sortie 112, 122 permet notamment de contrôler la durée de l'étincelle des bougies auxquelles il est associé.

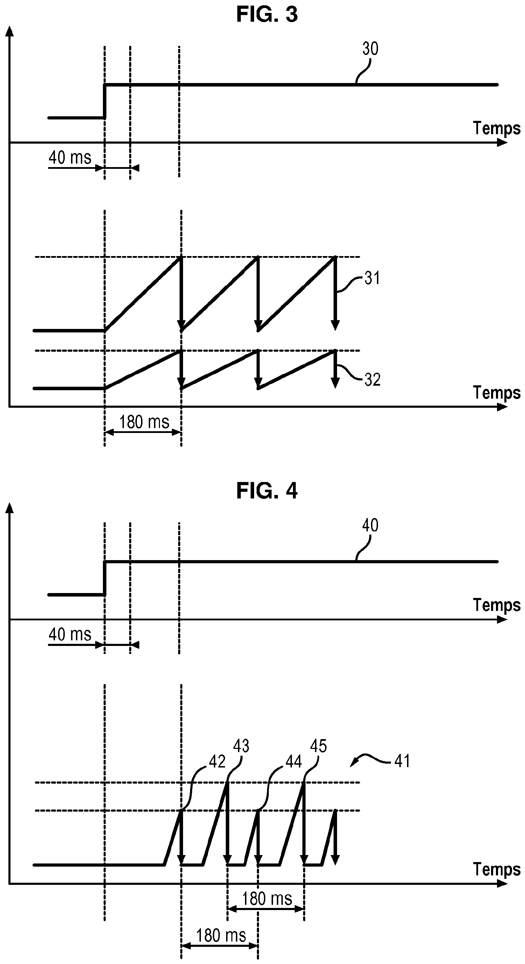

La figure 3 illustre la charge des condensateurs 111, 121 du boîtier d'allumage 100 de l'état de la technique en réponse à un signal de commande de l'état de la technique. La courbe supérieure 30 représente l'évolution du signal de commande. La courbe médiane 31 illustre l'énergie de charge du condensateur 111 de la voie d'allumage de bougie principale 110, et la courbe inférieure 32 illustre l'énergie de charge du condensateur 121 de la voie d'allumage de bougie de postcombustion 120. L'échelle est arbitraire.

Un échelon ou front de tension du signal de commande entraîne l'activation des voies d'allumage des bougies principales 110 et des voies d'allumage des bougies de postcombustion 120. Comme expliqué précédemment, il n'y a pas de ségrégation entre les bougies d'allumage. Les bougies principales claquent donc en même temps que les bougies de postcombustion, comme le montre la simultanéité des chutes d'énergie emmagasinée par les condensateurs 111, 121 sur les courbes 31, 32 d'énergie de charge de ceux-ci.

Afin de pallier les défauts précédemment exposés, on propose selon l'invention un boîtier d'allumage pour turboréacteur apte, en réponse à des commandes impulsionnelles sur une unique voie de commande, à activer sélectivement la voie d'allumage de bougie principale ou la voie d'allumage de bougie de postcombustion. La figure 2 illustre un mode de réalisation possible d'un tel boîtier d'allumage et la description qui suit sera faite en référence à ce mode de réalisation illustré par la figure 2.

Le boîtier d'allumage 200 présente une alimentation électrique 201 et une unique voie de commande 202 pour recevoir un signal de commande en provenance d'un calculateur. La voie de commande 202 est ici matérialisée par deux lignes physiques pour réaliser une redondance améliorant la fiabilité de la commande du boîtier 200.

Un étage de traitement électrique 203 met en œuvre un filtrage électrique de l'alimentation et du signal de commande, et comporte un dispositif de protection contre les surtensions, afin de protéger le boîtier contre d'éventuelles altérations de ces entrées susceptibles d'endommager le boîtier d'allumage 200 ou d'en altérer le fonctionnement.

Le boîtier d'allumage 200 comporte une voie d'allumage de bougie principale 210 pour exciter au moins une bougie principale d'une chambre de combustion principale et une voie d'allumage de bougie de postcombustion 220 pour exciter au moins une bougie de postcombustion d'une chambre de postcombustion.

Le boîtier d'allumage 200 comporte également un module de commande 204 qui reçoit le signal de commande après qu'il ait transité par la voie de commande 202 et été traité par l'étage de traitement électrique 203. Ce module de commande 204 décode le signal de commande afin de déterminer quelle voie d'allumage doit être activée.

Le boîtier d'allumage 200 comprend également une voie d'alimentation électrique 205 commune à la voie d'allumage de bougie principale 210 et à la voie d'allumage de bougie postcombustion 220, ladite voie d'alimentation électrique 205 commune comprenant un bloc capacitif unique 209 destiné à être amené à une tension donnée dépendant de la voie d'allumage à activer.

Ainsi, contrairement au boîtier de commande 100 de l'état de la technique illustré par la figure 1, le boîtier de commande 200 selon le mode de réalisation possible de l'invention présente un volume optimisé en ce qu'il présente un unique bloc capacitif 209 pour les deux voies d'allumage 210, 220 là où le boîtier de commande 100 de l'état de la technique illustré par la figure 1 prévoit un condensateur pour chaque voie d'allumage 110, 120.

Afin de charger le bloc capacitif unique 209 à a tension désirée, la voie d'alimentation électrique 205 commune comporte un module d'alimentation à découpage 206 de type convertisseur Flyback et un transformateur 207 pour élever la tension. Un redresseur 208 redresse ensuite le courant pour charger le bloc capacitif 209.

Chacune des voies d'allumage 210, 220 comporte un thyristor 211, 221 relié au bloc capacitif unique 209, ledit thyristor 211, 221 étant commandé en fonction de l'état de la voie d'alimentation électrique commune 205 et de la commande impulsionnelle décodée par le module de commande 204. Le module d'alimentation à découpage 206 surveille la charge du transformateur 207 pour la commutation de commande aux thyristors 211, 221.

Le thyristor 211, 221 de la voie d'allumage 210, 220 à activer est rendu passant lorsque l'énergie de charge désirée du bloc capacitif 209 est atteinte. Le courant de décharge du bloc capacitif est alors transmis aux bobines d'induction des étages de sortie 212, 222 et entraîne le claquage des bougies d'allumage auxquelles l'énergie est transmise par les moyens de connexions 213, 223 avec celles-ci.

Le boîtier d'allumage 200 selon l'invention permet ainsi de disposer de deux voies d'allumage 210, 220 distinctes malgré une seule voie d'alimentation électrique commune 205. Elle permet donc un gain appréciable en poids et en volume, ainsi qu'en composants, impactant favorablement le coût unitaire d'un boîtier d'allumage.

Dans un mode de réalisation préféré, l'activation sélective de la voie d'allumage de bougie principale 210 ou de la voie d'allumage de bougie de postcombustion 220 est fonction de durées d'impulsions du signal de commande.

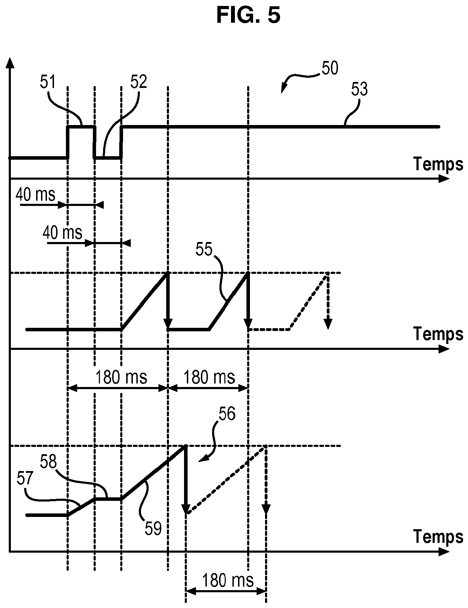

La figure 5 est un chronogramme sur lequel est représentée l'évolution 50 du signal de commande selon un mode de réalisation possible de l'invention dans le cadre de l'excitation d'une bougie principale.

Une impulsion d'allumage de bougie principale 51 d'une durée déterminée, par exemple de 40 ms, au cours de laquelle le signal prend un niveau haut, suivie d'une temporisation 52 de 40 ms au cours de laquelle le signal prend un niveau bas, indique au module de commande 204 que c'est la voie d'allumage de bougie principale 213 qui doit être activée afin d'exciter la bougie principale pour que celle-ci claque.

La courbe médiane 55 illustre l'énergie de charge du bloc capacitif 209 en réponse au signal de commande illustré par la courbe 50. L'impulsion 51 et la temporisation 52 sont suivies par une commande continue 53 à un niveau de signal correspondant au niveau de signal d'impulsion 51. La charge du bloc capacitif 209 commence avec la commande continue 53, après que le module de commande 204 ait décodé le signal de commande.

Le temps de réponse au premier claquage est constitué par la durée de l'impulsion 51, soit 40 ms, la durée de la temporisation 52, soit 40 ms, et le temps de charge pendant l'application de la commande continue 53. Les caractéristiques de la voie d'alimentation électrique commune 205 sont choisies afin que le temps de charge du bloc capacitif 209 soit réduit par rapport au temps de charge de l'état de la technique, de sorte que le temps de réponse au premier claquage reste sensiblement le même que dans l'état de la technique, soit 180 ms. Les temps de réponse des claquages suivants sont de préférence sensiblement les mêmes, soit 180 ms. La séquence de claquage de ladite au moins une bougie principale est maintenue tant que dure la commande continue 53.

La courbe inférieure 56 illustre l'énergie de charge du condensateur 111 de la voie d'allumage 110 de la bougie principale dans un boîtier d'allumage 100 de l'état de la technique, en réponse au signal de commande illustré par la courbe 50. La charge du condensateur 111 commence dès l'impulsion 51 puisque le boîtier d'allumage de l'état de la technique interprète ladite impulsion comme l'échelon du signal de commande dans l'état de la technique. Une première charge 57 commence donc dès le début de l'impulsion 51, puis la charge s'interrompt à un niveau stable 58 pendant la temporisation 52 avant de reprendre dans une seconde phase 59 lors de l'application de la commande continue 53. Les claquages suivants sont similaires à ceux de l'état de la technique puisque la commande continue 53 alors appliquée est similaire à l'échelon du signal de commande de l'état de la technique.

Ainsi, la commande impulsionnelle permet de commander le boîtier d'allumage 100 de l'état de la technique dans le cadre de l'excitation des bougies principales, avec simplement l'introduction d'un retard, ici de 40 ms, dû à la temporisation 52 dans le signal de commande. De fait, le temps de réponse au premier claquage est de 220 ms tandis que la période des claquages suivants reste de 180 ms lors de la commande continue 53 puisqu'il n'y a alors pas de temporisation.

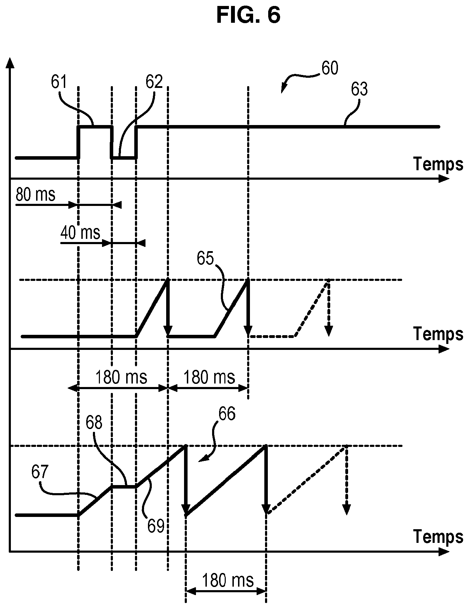

La figure 6 est un chronogramme sur lequel est représentée l'évolution 60 du signal de commande selon un mode de réalisation possible de l'invention dans le cadre de l'excitation d'une bougie de postcombustion.

Une impulsion d'allumage de bougie de postcombustion 61 d'une durée déterminée, en l'occurrence de 80 ms, au cours de laquelle le signal prend un niveau haut, suivie d'une temporisation 62 de 40 ms au cours de laquelle le signal prend un niveau bas, indique au module de commande 204 que c'est la voie d'allumage de la bougie de postcombustion 223 qui doit être activée afin d'exciter la bougie de postcombustion pour que son claquage entraîne l'allumage de la postcombustion.

La courbe médiane 65 illustre l'énergie de charge du bloc capacitif 209 en réponse au signal de commande illustré par la courbe 60. L'impulsion 61 et la temporisation 62 sont suivies par une commande continue 63 à un niveau de signal correspondant au niveau de signal d'impulsion 61. La charge du bloc capacitif 209 commence avec la commande continue 63, après que le module de commande 204 ait décodé le signal de commande.

Le temps de réponse au premier claquage de la bougie de postcombustion est constitué par la durée de l'impulsion 61, soit 80 ms, la durée de la temporisation 62, soit 40 ms, et le temps de charge pendant l'application de la commande continue 63. Les caractéristiques de la voie d'alimentation électrique commune 205 sont choisies afin que le temps de charge du bloc capacitif 209 soit réduit par rapport au temps de charge de l'état de la technique, de sorte que le temps de réponse au premier claquage reste sensiblement le même que dans l'état de la technique, soit 180 ms. Les temps de réponse des claquages suivants sont de préférence sensiblement les mêmes, soit 180 ms. La séquence de claquage de ladite au moins une bougie principale est maintenue tant que dure la commande continue 63.

La courbe inférieure 66 illustre l'énergie de charge du condensateur 121 de la voie d'allumage 120 de la bougie de postcombustion dans un boîtier d'allumage 100 de l'état de la technique, en réponse au signal de commande illustré par la courbe 60. La charge du condensateur 121 commence dès l'impulsion 61 puisque le boîtier d'allumage de l'état de la technique interprète ladite impulsion comme l'échelon appliqué du signal de commande dans l'état de la technique. Une première charge 67 commence donc dès le début de l'impulsion 61, puis la charge s'interrompt à un niveau stable 68 pendant la temporisation 62 avant de reprendre dans une seconde phase 69 lors de l'application de la commande continue 63 jusqu'au claquage. Les claquages suivants sont similaires à ceux de l'état de la technique puisque la commande continue 63 alors appliquée est similaire à l'échelon du signal de commande de l'état de la technique.

Ainsi, la commande impulsionnelle permet de commander le boîtier d'allumage 100 de l'état de la technique dans le cadre de l'excitation de bougies de postcombustion, avec simplement l'introduction d'un retard de 40 ms dû à la temporisation 62 du signal de commande. De fait, le temps de réponse au premier claquage est de 220 ms tandis que la période des claquages suivants reste de 180 ms.

La compatibilité des commandes impulsionnelles est complète avec les systèmes existants. Il en résulte que le signal de commande peut être adapté pour présenter des commandes impulsionnelles préalablement à la mise en place d'un boîtier d'allumage 200 selon l'invention. De plus, les commandes impulsionnelles ne nécessitent pas de voie de commande supplémentaire, et sont compatible avec les calculateurs existants, ainsi qu'avec la connectique de ces calculateurs avec les boîtiers de commande.

Les commandes impulsionnelles présentent l'avantage de pouvoir être facilement identifiables par le boîtier d'allumage selon l'invention. De même, la sélection de l'allumage par la durée de l'impulsion est également facile à traiter par le boîtier d'allumage selon l'invention. En effet, la logique d'une telle commande est simple et ne requiert pas de circuit de détection complexe.

En outre, la commande impulsionnelle peut facilement évoluer pour intégrer d'autres fonctionnalités. Notamment, un préchauffage des bougies peut être mis en place au moyen d'une largeur d'impulsion dédiée, avec une largeur d'impulsion correspondant au préchauffage de bougie principale et une autre largeur correspondant au préchauffage de bougie de postcombustion.

L'usure des bougies peut également être surveillée en injectant différent niveaux d'énergie aux bougies. Dans ce cas, une commande impulsionnelle spécifique est envoyée au boîtier 200 par le signal de commande afin d'injecter un niveau d'énergie correspondant. La détermination d'un niveau d'énergie en-dessous duquel ladite bougie ne claque pas permet de déterminer l'usure de la bougie, afin de pouvoir éventuellement procéder à un remplacement préventif.

De préférence, la durée d'une impulsion du signal de commande pour commander l'activation d'une voie d'allumage dépend de l'énergie requise pour l'excitation de la bougie correspondante à ladite voie d'allumage. La durée d'une impulsion du signal de commande peut ainsi être choisie d'autant plus courte que l'énergie de charge du bloc capacitif 209 requise pour l'excitation d'une bougie est importante. Par exemple, dans le cas où l'excitation d'une bougie de postcombustion requiert 0,5 J et l'excitation d'une bougie principale requiert 2,2 J, la durée d'une impulsion du signal de commande pour l'activation de la voie d'allumage de bougie de postcombustion est supérieure à la durée d'une impulsion du signal de commande pour l'activation de la voie d'allumage de bougie principale. Ainsi, la charge du bloc capacitif 209 démarre d'autant plus vite que l'énergie requise est élevée.

Le boîtier d'allumage 200 selon l'invention est compatible avec le signal de commande en échelon du système de l'état de la technique. La figure 4 est un chronogramme illustrant le comportement du boîtier d'allumage 200 selon un mode de réalisation possible de l'invention en réponse à un signal de commande de l'état de la technique. Le signal de commande présente un échelon 40 pour commander le claquage des bougies principales et des bougies de postcombustion. La courbe inférieure 41 illustre la charge du bloc capacitif 209 du boîtier d'allumage 200.

En présence d'un échelon dans le signal de commande, non précédé par une impulsion, la voie d'allumage des bougies de postcombustion 220 et la voie d'allumage 210 des bougies principales sont activées alternativement, entraînant alternativement le claquage des bougies de postcombustion et des bougies principales, respectivement.

Cependant, la présence d'un échelon n'est déterminée qu'après la durée la plus longue des deux durées d'impulsion correspondant respectivement à l'impulsion commandant l'activation de la voie d'allumage des bougies principales et des bougies de postcombustion, par l'absence de front descendant et de temporisation qui détermineraient la présence d'une impulsion. Avec les durées données en exemple, on arrive à une durée de 120 ms correspondant à l'impulsion de 80 ms suivie de la temporisation de 40 ms commandant l'allumage des bougies de postcombustion.

Lorsque le module de commande 204 est en présence d'un échelon et qu'il a déterminé l'absence d'impulsions à l'issue d'une durée prédéterminée, le module de commande détermine que les bougies principales et les bougies de postcombustion doivent claquer alternativement.

A cet effet, la charge du bloc capacitif 209 présente dans ce cas une première phase de charge 42 à l'issue de laquelle intervient le claquage des bougies de postcombustion, suivie d'une deuxième phase de charge 43 à l'issue de laquelle intervient le claquage des bougies principales, suivie d'une troisième phase de charge 44 à l'issue de laquelle intervient le claquage des bougies de postcombustion, suivie d'une quatrième phase de charge 45 à l'issue de laquelle intervient le claquage des bougies principales, etc. L'alternance de claquage des bougies principales et des bougies de postcombustion se poursuit tant que dure l'échelon du signal de commande.

De préférence, la durée entre deux claquage consécutifs d'une bougie est le même pendant la séquence de claquage, et de préférence la même durée sépare deux claquages consécutifs des bougies d'allumage et deux claquages consécutifs de bougies de postcombustion.

Dans l'exemple présenté, les claquages consécutifs des bougies principales sont espacés de 180 ms et les claquages consécutifs des bougies de postcombustion sont également espacés de 180 ms.

Ainsi, le boîtier d'allumage selon l'invention peut être commandé au moyen d'un signal de commande de l'état de la technique. Par conséquent, le boîtier d'allumage selon l'invention peut être mis en place avant l'adaptation du signal de commande.

Les temps de réponse du boîtier d'allumage selon l'invention peuvent être améliorés, aussi bien dans le cas d'un signal de commande avec impulsions, qu'avec le signal de commande de l'état de la technique ne présentant qu'un échelon, en commençant la charge du bloc capacitif 209 dès le passage du signal de commande à un niveau de signal correspondant à une impulsion ou à un échelon. En effet, puisque le bloc capacitif 209 est unique, l'indication par le signal de commande qu'un allumage est désiré entraîne nécessairement la nécessité de charger le bloc capacitif 209, aussi bien dans le cas où le signal de commande indique qu'une seule des voies d'allumage doive être activée que dans le cas où les deux voies d'allumage doivent être alternativement activées.

## Revendications

1. Boîtier d'allumage (200) pour turboréacteur, ledit boîtier comprenant:
- une alimentation électrique (201),
- une unique voie de commande (202) pour recevoir un signal de commande en provenance d'un calculateur,
- une voie d'allumage de bougie principale (210) pour exciter au moins une bougie principale d'une chambre de combustion principale,
- une voie d'allumage de bougie de postcombustion (220) pour exciter au moins une bougie de postcombustion d'une chambre de postcombustion,
ledit boitier étant **caractérisé en ce qu'**il est apte, en réponse à des commandes impulsionnelles sur ladite unique voie de commande (202), à activer sélectivement la voie d'allumage de bougie principale (210) ou la voie d'allumage de bougie de postcombustion (220) en fonction de durées d'impulsions (51, 61) du signal de commande.

2. Boîtier d'allumage (200) pour turboréacteur selon la revendication 1, comprenant en outre un module de commande (204) pour décoder le signal de commande afin de déterminer quelle voie d'allumage (210, 220) doit être activée.

3. Boîtier d'allumage (200) pour turboréacteur selon l'une des revendications précédentes, dans lequel la durée d'une impulsion (51, 61) du signal de commande pour commander l'activation d'une voie d'allumage (210, 220) dépend de l'énergie requise pour l'excitation de la bougie correspondante à ladite voie d'allumage (210, 220).

4. Boîtier d'allumage (200) selon l'une des revendications précédentes, dans lequel le signal présente une temporisation (52, 62) après chaque impulsion (51, 61) du signal de commande, ladite temporisation (52, 62) correspondant à un niveau de signal différent du niveau de signal de l'impulsion (51, 61) et étant suivie par une commande continue (53, 63) à un niveau de signal correspondant au niveau de signal de l'impulsion (51, 61).

5. Boîtier d'allumage (200) pour turboréacteur selon l'une quelconque des revendications précédentes, comprenant une voie d'alimentation électrique commune (205) à la voie d'allumage de bougie principale (210) et à la voie d'allumage de bougie postcombustion (220) , ladite voie d'alimentation électrique commune (205) comprenant un bloc capacitif unique (209) destiné à être amené à une tension dépendant de la voie d'allumage (210, 220) à activer.

6. Boîtier d'allumage (200) pour turboréacteur selon la revendication 5, dans lequel chacune des voies d'allumage (210, 220) comporte un thyristor (211, 221) relié au bloc capacitif unique (209), ledit thyristor (211, 221) étant commandé en fonction de l'état de la voie d'alimentation électrique commune (205) et de la commande impulsionnelle.

7. Boîtier d'allumage (200) selon l'une des revendications 5 ou 6, ledit boîtier (200) étant adapté pour commencer la charge du bloc capacitif (209) dès la détection d'une impulsion (51, 61) et avant la détermination de la voie d'allumage (210, 220) à activer.

8. Boîtier d'allumage (200) selon l'une des revendications précédentes, ledit boitier (200) étant apte, en réponse à un échelon de commande sur ladite unique voie de commande, à activer alternativement la voie d'allumage de bougie principale (210) et la voie d'allumage de bougie de postcombustion (220).

9. Système d'allumage pour turboréacteur, comprenant :
- un boîtier d'allumage (200) selon l'une quelconque des revendications précédentes,
- une bougie principale d'une chambre de combustion principale excitable par la voie d'allumage de bougie principale (210) dudit boîtier,
- une bougie de postcombustion excitable par la voie d'allumage de bougie de postcombustion (220) dudit boîtier,
- un calculateur relié à la voie de commande (202) dudit boîtier pour envoyer un signal de commande audit boîtier.

## Patentansprüche

1. Zündsteuergerät (200) für Turboluftstrahltriebwerk, wobei das Steuergerät folgendes umfasst:
- eine Stromversorgung (201),
- einen einzigen Steuerkanal (202) zum Empfangen eines Steuersignals von einem Rechner,
- einen Hauptzündkerzen-Zündpfad (210) zum Ansteuern mindestens einer Hauptzündkerze einer Hauptbrennkammer,
- einen Nachverbrennungszündkerzen-Zündpfad (220) zum Ansteuern mindestens einer Nachverbrennungszündkerze einer Nachverbrennungskammer,
wobei das Steuergerät dadurch charakterisiert ist, dass es in der Lage ist, als Reaktion auf Impulsbefehle auf dem einzigen Steuerkanal (202) den Zündpfad der Hauptzündkerze (210) oder den Zündpfad der Nachverbrennungszündkerze (220) selektiv zu aktivieren, im Verhältnis der Impulsdauer (51, 61) des Steuersignals.

2. Zündsteuergerät (200) für Turboluftstrahltriebwerk nach Anspruch 1, das ferner ein Steuermodul (204) zum Decodieren des Steuersignals umfasst, um zu bestimmen, welcher Zündpfad (210, 220) aktiviert werden muss.

3. Zündsteuergerät (200) für Turboluftstrahltriebwerk nach einem der vorangehenden Ansprüche, wobei die Dauer eines Impulses (51, 61) des Steuersignals zur Steuerung der Aktivierung eines Zündpfades (210, 220) von der Energie abhängt, die für die Ansteuerung der entsprechenden Zündkerze für den Zündpfad (210, 220) erforderlich ist.

4. Zündsteuergerät (200) nach einem der vorangehenden Ansprüche, wobei das Signal eine Verzögerung (52, 62) nach jedem Impuls (51, 61) des Steuersignals aufweist; wobei die Verzögerung (52, 62) einer Signalebene entspricht, die sich von der Impulssignalebene (51, 61) unterscheidet und von einem Dauerbefehl (53, 63) auf einer Signalebene gefolgt ist, die der Impulssignalebene entspricht (51, 61).

5. Zündsteuergerät (200) für Turboluftstrahltriebwerk nach einem der vorangehenden Ansprüche, das ein gemeinsames Stromversorgungspfad (205) für den Zündpfad der Hauptzündkerze (210) und den Zündpfad der Nachverbrennungszündkerze (220) umfasst, wobei dieser gemeinsame Stromversorgungspfad (205) einen einzigen kapazitiven Block (209) enthält, der für eine Spannung ausgelegt ist, die vom Zündpfad (210, 220) abhängig ist, der zu aktivieren ist.

6. Zündsteuergerät (200) für Turboluftstrahltriebwerk nach Anspruch 5, wobei jeder der Zündpfade (210, 220) einen Thyristor (211, 221) aufweist, der mit dem einzigen kapazitiven Block (209) verbunden ist, wobei der Thyristor (211, 221) im Bezug auf den Zustand des gemeinsamen Stromversorgungspfads (205) und der Impulssteuerung gesteuert wird.

7. Zündsteuergerät (200) nach einem der Ansprüche 5 oder 6, wobei das Steuergerät (200) für den Beginn der Ladung des kapazitiven Blocks (209) ausgelegt ist, sobald ein Impuls (51, 61) erkannt wird und vor der Festlegung des Zündpfades (210, 220), der zu aktivieren ist.

8. Zündsteuergerät (200) nach einem der vorangehenden Ansprüche, wobei das Steuergerät (200) dafür ausgelegt ist, als Reaktion auf eine Steuerstufe auf dem einzigen Steuerkanal, alternativ den Hauptzündkerzen-Zündpfad (210) und den Nachverbrennungszündkerzen-Zündpfad (220) anzusteuern.

9. Zündsystem für Turboluftstrahltriebwerk umfassend:
- einem Zündsteuergerät (200) nach einem der vorangehenden Ansprüche,
- einer Hauptzündkerze einer Hauptbrennkammer, die über den Hauptzündkerzen-Zündpfad (210) durch das Steuergerät angesteuert werden kann,
- einer Nachverbrennungszündkerze, die über den Zündpfad der Nachverbrennungszündkerze (220) durch das Steuergerät angesteuert werden kann,
- einem Rechner, der mit dem Steuerkanal (202) des Steuergerätes verbunden ist, um ein Steuersignal an das Steuergerät zu senden.

## Claims

1. An ignition unit (200) for a turbojet engine, said unit composing:
- an electric power supply (201),
- a single control channel for receiving (202) a control signal from a computer,
- a main spark plug ignition channel (210) for energizing at least one main spark plug of a main combustion chamber,
- an afterburning spark plug additional channel (220) for energizing at least one afterburning spark plug of a post combustion chamber,
said unit being **characterized in that**, in response to pulsed controls on said single control channel (202), it is able to selectively activate the main spark plug channel (210), or the afterburning spark plug channel (220), depending on the pulse durations (51, 61) of the control signal.

2. The ignition unit (200) for a turbojet engine according to the claim 1, further comprising a control module (204), for decoding the control signal in order to determine which ignition channel (210, 220) should be activated.

3. The ignition unit (200) for a turbojet engine according to one of preceding claims, wherein the duration of a pulse (51, 61) of the control signal for controlling the activation of an ignition channel (210, 220) depends on the required energy for energizing the spark plug corresponding to said ignition channel (210, 220).

4. The ignition unit (200) according to one of preceding claims, wherein the signal has a time-out (52, 62) after each pulse (51, 61) of the control signal, said time-out (52, 62) corresponding to a signal level different from the signal level of the pulse (51, 61) and being followed by a continuous control (53, 63) at a signal level corresponding to the signal level of the pulse (51, 61).

5. The ignition unit (200) for a turbojet engine according to any of the preceding claims, comprising an electric power supply channel (205) common to the ignition channel of the main spark plug (210) and to the afterburning spark plug ignition channel (220), said common electric power supply channel (205), comprising a single capacitive bloc (209) intended to be brought to a voltage depending on the ignition channel (210, 220) to be activated.

6. The ignition unit (200) for a turbojet engine according to claim 5, wherein each of the ignition channels (210, 220) includes a thyristor (211, 221) connected to the single capacitive bloc (209), said thyristor (211, 221) being controlled depending on the state of the common electric power supply channel (205) and on the pulsed control.

7. The ignition unit (200) according to one of claims 5 or 6, said unit (200) being adapted so as to begin charging the capacitive bloc (209) as soon as a pulse (51, 61) has being detected and before determining the ignition channel (210, 220) to be activated.

8. The ignition unit (200) according to one of the preceding claims, said unit (200) being able, in response to a control step on said single control channel, to alternately activate the main spark plug ignition channel (210) and the afterburning spark plug ignition channel (220).

9. The ignition system for a turbojet engine, comprising:
- an ignition unit (200) according to any of the preceding claims,
- a main spark plug of a main combustion chamber which may be energized through the main spark plug ignition channel (210) of said unit,
- an afterburning spark plug which may be energized through the afterburning spark plug ignition channel (220) of said unit,
- a computer connected to the control channel (202) of said unit for sending a control signal to said unit.
